# FASCICULE DE BREVET EUROPEEN

(11) **EP 1 580 102 B1**
(45) Date de publication et mention de la délivrance du brevet: **14.05.2008**
(21) Numéro de dépôt: 05290566.8
(22) Date de dépôt: 15.03.2005
(51) Int. Cl.: B62D 65/00

(54) **Procédé d'assemblage d'un pavillon en aluminium sur les flancs d'une caisse d'un véhicule automobile et pavillon en aluminium pour véhicle automobile**
Montageverfahren für ein Aluminiumdach auf die Seitenwände eines Kraftfahrzeuges, und Aluminiumdach für ein Kraftfahrzeug
Method for assembling an aluminium roof onto the side walls of an automobile, aluminium roof for an automobile

(30) Priorité: 22.03.2004 FR 0402935
(43) Date de publication de la demande: 28.09.2005
(73) Titulaire: Peugeot Citroën Automobiles S.A., 78140 Vélizy Villacoublay (FR)
(72) Inventeur: Masson, Patrick, 92370 Chaville (FR)
(74) Mandataire: Lanceplaine, Jean-Claude

(56) Documents cités:
- DE-A- 19 716 553
- DE-A- 19 746 165
- US-B2- 6 676 203

## Description

La présente invention concerne un pavillon en aluminium ou en alliage d'aluminium pour véhicule automobile ainsi qu'une caisse de véhicule automobile équipée d'un tel pavillon.

Les caisses des véhicules automobiles sont formées à partir de divers éléments métalliques assemblés entre eux par soudage ou par rivetage et qui comprennent notamment un pavillon et, sur chaque flanc, un arc de pavillon fixé sur chacun des bords longitudinaux du pavillon, un longeron et un montant central reliant cet arc de pavillon à ce longeron.

Le plus souvent, ces différents éléments sont réalisés à partir de tôles en acier.

Or, la tendance des constructeurs de véhicules automobiles est de réduire le poids des véhicules pour diminuer la consommation, tout en conservant, voire en améliorant, la résistance aux chocs de ceux-ci.

Une des solutions envisagées consiste à utiliser des tôles de plus en plus minces ou des tôles à haute limite élastique, ce qui pose des problèmes connexes d'emboutissage et de résistance mécanique.

Une autre solution consiste à employer pour certains éléments de la caisse, des éléments réalisés à partir d'aluminium ou d'alliage d'aluminium dont le poids spécifique équivaut à un tiers de celui de l'acier. C'est le cas par exemple pour le pavillon des véhicules automobiles.

De préférence, les constructeurs associent un pavillon en aluminium avec des flancs dont la plupart des éléments les composant sont en acier, car ce matériau permet de mieux répondre aux contraintes de style que l'aluminium.

Mais, l'utilisation d'un tel matériau pour le pavillon avec des flancs dont les arcs de pavillon sont en acier, pose des problèmes.

On connaît dans le document DE 197 46 165, un pavillon en aluminium ou en alliage d'aluminium pour véhicule automobile du type comprenant sur chacun de ses bords longitudinaux, un rebord rabattu vers le bas et un profilé en aluminium ou en alliage d'aluminium comportant une première branche fixée sur ledit rebord et une seconde branche sensiblement perpendiculaire à ladite première branche et s'étendant au-dessous du pavillon, ladite seconde branche étant destinée à être fixée à un arc de pavillon d'un flanc d'une caisse du véhicule automobile.

Un autre exemple de la technique antérieure est divulgué par le document DE19716553.

L'invention a pour but de proposer un pavillon pour véhicule automobile qui évite les inconvénients précédemment mentionnés.

L'invention a pour objet un pavillon en aluminium ou en alliage d'aluminium pour véhicule automobile, du type comprenant, sur chacun de ses bords longitudinaux, un rebord rabattu vers le bas et un profilé en forme de "L" en aluminium ou en alliage d'aluminium comportant une première branche fixée sur ledit rebord et une seconde branche sensiblement perpendiculaire à ladite première branche destinée à être fixée à un arc de pavillon d'un flanc d'une caisse de véhicule automobile, caractérisé en ce que la première branche du profilé est fixée sur le rebord du pavillon par soudage et la seconde branche du profilé s'étendant au-dessous du pavillon, est fixée sur l'arc de pavillon par vissage au moyen d'écrous sertis à intervalles réguliers sur la longueur de la seconde branche et comporte deux parois longitudinales et parallèles, décalées l'une par rapport à l'autre et reliées entre elles par une portion courbe et en ce que ledit pavillon comporte un cordon de colle interposé entre la seconde branche du profilé et l'arc de pavillon.

Selon une autre caractéristique de l'invention, les écrous sont disposés sur la paroi de la seconde branche la plus éloignée de la première branche du profilé et le cordon de colle est disposé au-dessous de la paroi de la seconde branche la plus proche de ladite première branche.

L'invention a aussi pour objet une caisse de véhicule automobile, du type comprenant deux flancs comportant chacun un arc de pavillon en acier, caractérisée en ce qu'elle comprend, entre les arcs de pavillon, un pavillon tel que précédemment mentionné.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'une caisse d'un véhicule automobile équipée d'un pavillon conforme à l'invention,
- la Fig. 2 est une vue schématique éclatée et en coupe transversale du pavillon et d'un arc de pavillon avant assemblage, et
- la Fig. 3 est une vue schématique en perspective d'un bord du pavillon et de l'arc de pavillon après assemblage.

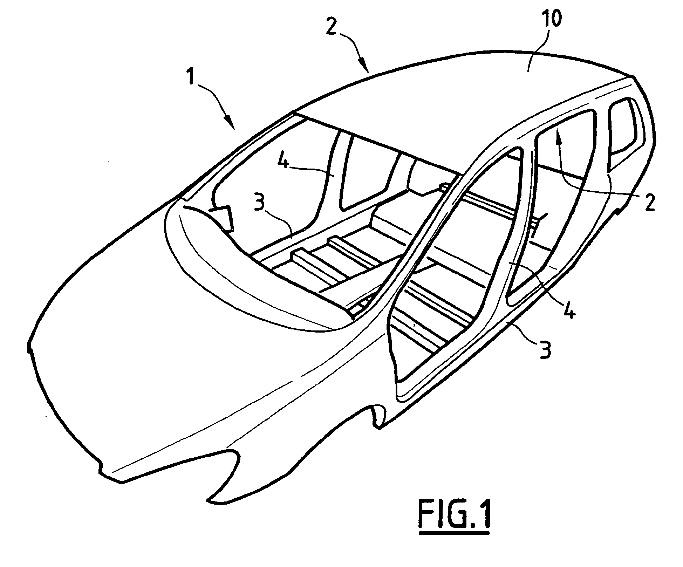

Sur la Fig. 1, on a représenté schématiquement une caisse d'un véhicule automobile désignée dans son ensemble par la référence 1 et qui comprend notamment un pavillon 10, deux arcs de pavillon 2 opposés et parallèles, deux longerons 3 et deux montants centraux 4 reliant chacun un arc de pavillon 2 et un longeron 3.

De chaque côté de la caisse 1 du véhicule automobile, un arc de pavillon 2, un longeron 3 et un montant 4 constituent un flanc de ladite caisse.

Sur les figures, les épaisseurs des différents éléments ont été volontairement augmentées afin de faciliter la compréhension.

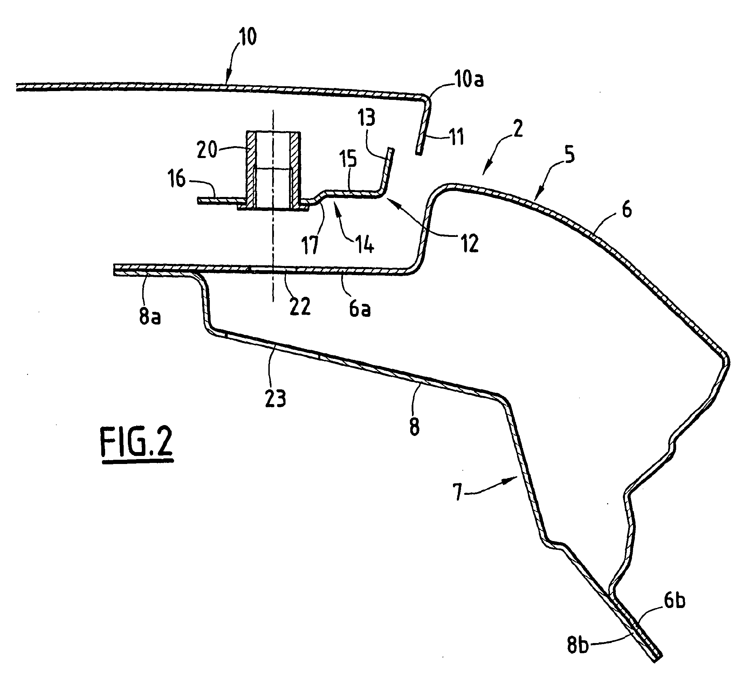

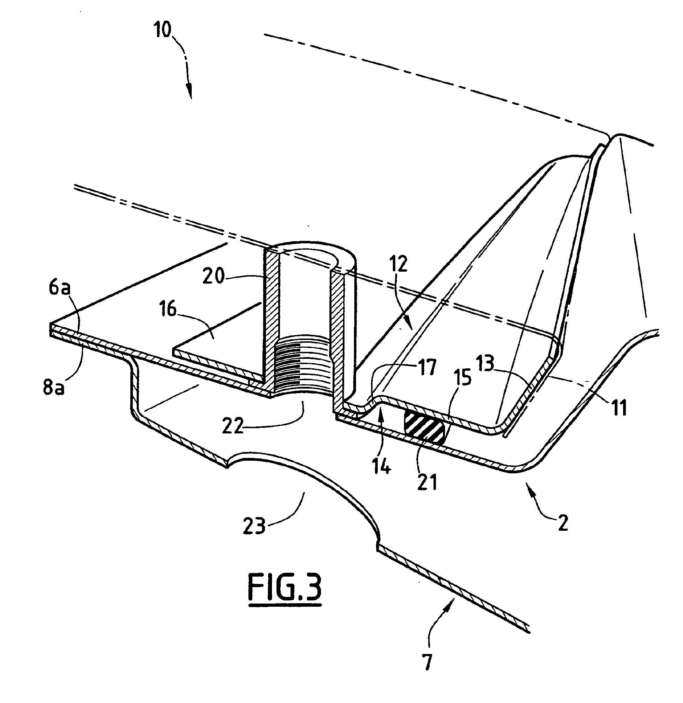

En se reportant maintenant aux Figs. 2 et 3, on va décrire l'assemblage d'un bord du pavillon 10 avec un arc de pavillon 2, l'assemblage du bord opposé de ce pavillon 10 avec l'autre arc de pavillon 2 étant identique.

Ainsi que représenté sur les Figs. 2 et 3, l'arc de pavillon 2 comprend une traverse supérieure 5 en acier comportant une partie centrale 6 longitudinale bordée, sur l'un de ses bords, d'une feuillure intérieure 6a située vers l'intérieur de la caisse 1 et, sur l'autre desdits bords, d'une feuillure extérieure 6b située vers l'extérieur de ladite caisse 1.

Cet arc de pavillon 2 comprend également une traverse inférieure 7 également en acier comportant une partie centrale 8 longitudinale bordée, sur l'un de ses bords, d'une feuillure intérieure 8a située vers l'intérieur de la caisse 1 et, sur l'autre desdits bords, d'une feuillure extérieure 8b située vers l'extérieur de ladite caisse 1.

Les feuillures intérieures 6a et 8a ainsi que les feuillures extérieures 6b, 8b sont reliées respectivement entre elles par tout moyen approprié, comme par exemple par soudage ou par rivetage.

Ainsi que montré notamment à la Fig. 2, le pavillon 10 qui est en aluminium ou en alliage d'aluminium, comporte, sur chacun de ses bords longitudinaux 10a, un rebord 11 rabattu vers le bas et s'étendant sur toute la longueur dudit bord longitudinal 10a.

Le pavillon 10 comprend également, de chaque côté, un profilé en forme de "L" en aluminium ou en alliage d'aluminium et désigné par la référence générale 12.

Ce profilé 12 comporte une première branche 13 fixée sur le rebord 11 et une seconde branche 14 sensiblement perpendiculaire à la première branche 13 et s'étendant au-dessous du pavillon 10. La première branche 13 du profilé 12 est fixée sur le rebord 11 par soudure, comme par exemple une soudure au laser ou une soudure électrique par points, et la seconde branche 14 est destinée à être fixée sur la feuillure intérieure 6a de la traverse supérieure 5 par vissage, comme on le verra ultérieurement.

Le profilé 12 est réalisé par extrusion et cintrage suivant le galbe de la caisse 1 du véhicule automobile. Des créneaux, non représentés, peuvent être réalisés sur le profilé 12 afin de donner plus de souplesse lors du cintrage.

De préférence, la seconde branche 14 du profilé 12 comporte deux parois longitudinales et parallèles, respectivement 15 et 16. Ces deux parois 15 et 16 sont décalées l'une par rapport à l'autre, comme représentées à la Fig. 2, et sont reliées entre elles par une portion courbe 17.

La paroi 16 de la seconde branche 14 du profilé 12 comporte, sur sa face supérieure, des écrous 20 fixés sur ladite paroi 16, par exemple par sertissage. Ces écrous 20 sont régulièrement répartis sur la longueur du profilé 12 et sont destinés à la fixation de l'ensemble constitué par le pavillon 10 et les profilés 12 sur les arcs de pavillon 2.

De préférence, la hauteur des écrous 20 est sensiblement égale à la distance séparant le pavillon 10 de la paroi 16 de la seconde branche 14 du profilé 12, après la fixation de ce profilé 12 sur le rebord 11 dudit pavillon 10.

Le montage du pavillon 10 sur la caisse 1 est réalisé de la façon suivante.

Ce montage est effectué après assemblage des différents éléments composant chaque flanc et après avoir relié lesdits flancs par deux poutres de liaison transversales, non représentées.

Tout d'abord, un profilé 12 muni des écrous 20 est soudé sur chaque rebord longitudinal 11 du pavillon 10.

L'ensemble ainsi constitué est posé entre les deux arcs de pavillon 2 des flancs de la caisse 1 du véhicule en appliquant la seconde branche 14 de chaque profilé 12 sur la feuillure intérieure 6a de chaque traverse 2, comme représenté à la Fig. 3.

Un cordon de colle 21 est interposé entre la seconde branche 14 de chaque profilé 12 et la feuillure intérieure 6a et, de préférence, ce cordon de colle 21 est disposé au-dessous de la paroi 15 de cette seconde branche 14, c'est à dire entre les écrous 20 de fixation et la liaison de la première branche 13 sur le rebord 11 du pavillon 10. Ce cordon de colle 21 joue également le rôle de cordon d'étanchéité.

Ensuite, le pavillon 10 est fixé sur chaque arc 2 en vissant un organe de vissage, non représenté, comme par exemple une vis, dans chaque écrou 20. Pour cela, la feuillure intérieure 6a de la traverse supérieure 6 de chaque arc de pavillon 2 est pourvue d'un orifice 22 de passage d'un organe de vissage et la traverse inférieure 7 de chaque arc de pavillon 2 est pourvue d'un orifice 23 de passage d'un organe de vissage et également d'un outil de vissage.

Par conséquent, l'assemblage aluminium sur aluminium entre le pavillon 10 et chaque profilé 12 est réalisé par soudage et l'assemblage aluminium sur acier entre chaque profilé 12 et chaque arc de pavillon 2 est réalisé par collage et par vissage ce qui permet de s'affranchir des dilatations différentielles entre l'aluminium et l'acier et de diminuer les risques de déformation dans ces zones et également au niveau du pavillon, notamment lors du passage de la caisse en cataphorèse et en étuve.

Au cours de ce passage en cataphorèse et en étuve, le pavillon 10 peut être surélevé par rapport aux arcs de pavillon 2 en intercalant des cales, non représentées, d'une hauteur par exemple de 10 mm, entre chaque profilé 12 et chaque arc de pavillon 2 afin d'assurer le passage du bain de cataphorèse correctement pour protéger les zones contre la corrosion. Le tout est vissé pour assurer le maintien de l'ensemble du pavillon lors du passage dans le bain de cataphorèse.

Après passage dans ce bain, le pavillon est démonté et les cales sont retirées.

Le procédé d'assemblage selon l'invention présente l'avantage de pouvoir rapporter le pavillon sur les arcs de pavillon après assemblage des flancs de la caisse ce qui permet de pouvoir monter des pavillons ayant une couleur différente de celle de la caisse.

De plus, avec un tel pavillon, la largeur de la gorge ménagée de chaque côté de ce pavillon entre le rebord longitudinal et la traverse supérieure de l'arc de pavillon est réduite.

Enfin, le toit selon l'invention permet d'obtenir un gain de poids de la caisse de véhicule automobile et ainsi de pouvoir optimiser la position du centre de gravité, tout en ayant des flancs de caisse en acier ce qui facilite la mise en forme de ces flancs en fonction du style général du véhicule automobile.

## Revendications

1. Pavillon en aluminium ou en alliage d'aluminium pour véhicule automobile, du type comprenant sur chacun de ses bords longitudinaux (10a), un rebord (11) rabattu vers le bas et un profilé (12) en forme de "L" en aluminium ou en alliage d'aluminium comportant une première branche (13) fixée sur ledit rebord (11) et une seconde branche (14) sensiblement perpendiculaire à ladite première branche (13) et destinée à être fixée à un arc de pavillon (2) d'un flanc (2, 3, 4) d'une caisse (1) du véhicule automobile, **caractérisé en ce que** la première branche (13) du profilé (12) est fixée sur le rebord (11) du pavillon par soudage et la seconde branche (14) du profilé (12) s'étendant au-dessous du pavillon (10), est fixée sur l'arc de pavillon (2) par vissage au moyen d'écrous (20) sertis à intervalles réguliers sur la longueur de la second branche (14) et comporte deux parois (15, 16) longitudinales et parallèles décalées l'une par rapport à l'autre et reliées entre elles par une portion courbe et **en ce que** ledit pavillon comporte un cordon de colle (21) interposable entre la seconde branche (14) du profilé (12) et l'arc du pavillon (2).

2. Pavillon selon la revendication 1, **caractérisé en ce que** les écrous (20) sont disposés sur la paroi (16) de la seconde branche (14) la plus éloignée de la première branche (13) du profilé (12) et le cordon de colle (21) est disposé au-dessous de la paroi (15) de la seconde branche (14) la plus proche de ladite première branche (13).

3. Caisse de véhicule automobile, du type comprenant deux flancs (2, 3, 4) comportant chacun un arc de pavillon (2) en acier, **caractérisée en ce qu'**elle comprend, entre les arcs de pavillon (2), un pavillon (10) selon la revendication 1 ou 2.

## Claims

1. Roof made of aluminium or aluminium alloy for a motor vehicle, of the type comprising, on each of its longitudinal edges (10a), a rim (11) folded downwards and an "L"-shaped section (12) made of aluminium or aluminium alloy comprising a first branch (13) fixed to said rim (11) and a second branch (14) substantially perpendicular to said first branch (13) and adapted to be fixed to a roof arch (2) of a side member (2, 3, 4) of a body (1) of the motor vehicle, **characterised in that** the first branch (13) of the section (12) is fixed to the rim (11) of the roof by welding and the second branch (14) of the section (12) extending underneath the roof (10) is fixed to the roof arch (2) by screwing using nuts (20) crimped at regular intervals along the length of the second branch (14) and comprises two parallel longitudinal walls (15, 16) offset from one another and connected to one another by a curved portion and **in that** said roof comprises a bead of adhesive (21) adapted to be interposed between the second branch (14) of the section (12) and the roof arch (2).

2. Roof according to claim 1, **characterised in that** the nuts (20) are arranged on the wall (16) of the second branch (14) which is furthest from the first branch (13) of the section (12) and the bead of adhesive (21) is arranged below the wall (15) of the second branch (14) which is closest to said first branch (13).

3. Motor vehicle body of the type comprising two side members (2, 3, 4) each comprising a steel roof arch (2), **characterised in that** it comprises, between the roof arches (2), a roof (10) according to claim 1 or 2.

## Patentansprüche

1. Karosserieoberteil aus Aluminium oder aus Aluminiumlegierung für Kraftfahrzeuge, von dem Typ, auf jedem seiner Längsränder (10a) einen nach unten umgeschlagenen Flansch (11) und ein Profil (12) in "L"-Form aus Aluminium oder aus Aluminiumlegierung umfassend, einen ersten Schenkel (13), der auf besagtem Flansch (11) befestigt ist und einen zweiten Schenkel (14) umfassend, der merklich senkrecht zum besagten ersten Schenkel (13) ist und dazu bestimmt, an einem Bogen des Karosserieoberteils (2) einer Flanke (2, 3, 4) einer Kraftfahrzeugkarosserie (1) befestigt zu werden, **dadurch gekennzeichnet, dass** der erste Schenkel (13) des Profils (12) durch Schweißen auf dem Flansch (11) des Karosserieoberteils befestigt wird, und der zweite Schenkel (14) des Profils (12), das sich unterhalb des Karosserieoberteils (10) erstreckt, auf dem Bogen des Karosserieoberteils (2) durch Schrauben mit Hilfe von Muttern (20) befestigt wird, die in regelmäßigen Abständen auf der Länge des zweiten Schenkels (14) eingesetzt sind und zwei längliche und parallele, gegeneinander verschobene Wände (15, 16) umfasst, die untereinander durch einen gebogenen Teil verbunden sind, und dass das besagte Karosserieoberteil eine zwischen dem zweiten Schenkel (14) des Profils (12) und dem Bogen des Karosserieoberteils (2) einsetzbare Klebeleiste (21) umfasst.

2. Karosserieoberteil gemäß dem Anspruch 1, **dadurch gekennzeichnet, dass** die Muttern (20) auf der am weitesten vom ersten Schenkel (13) des Profils (12) entfernten Wand (16) des zweiten Schenkels (14) angebracht werden, und die Klebeleiste (21) unterhalb der dem besagten ersten Schenkel (13) am nächsten befindlichen Wand (15) des zweiten Schenkels (14) angebracht wird.

3. Kraftfahrzeugkarosserie, von dem Typ, zwei Flanken (2, 3, 4) umfassend, von denen jede einen Bogen des Karosserieoberteils (2) aus Stahl umfasst, **dadurch gekennzeichnet, dass** sie ein Karosserieoberteil (10) gemäß den Ansprüchen 1 oder 2 zwischen den Bögen des Karosserieoberteils (2) umfasst.
